**Europäisches Patentamt**

**European Patent Office**

**Office européen des brevets**

(11) Veröffentlichungsnummer: **0 229 261 B1**

## EUROPÄISCHE PATENTSCHRIFT

(45) Veröffentlichungstag der Patentschrift: **10.04.91**

(21) Anmeldenummer: **86115900.2**

(22) Anmeldetag: **15.11.86**

(51) Int. Cl.⁵: **B01D 53/02**, B01J 20/28, B01J 37/00

(54) **Zeolithformkörper.**

(30) Priorität: **11.01.86 DE 3600628**

(43) Veröffentlichungstag der Anmeldung:
**22.07.87 Patentblatt 87/30**

(45) Bekanntmachung des Hinweises auf die
Patenterteilung:
**10.04.91 Patentblatt 91/15**

(84) Benannte Vertragsstaaten:
**AT BE CH DE ES FR GB GR IT LI LU NL SE**

(56) Entgegenhaltungen:
**US-A- 3 972 834**
**US-A- 4 215 015**
**US-A- 4 239 655**

**CHEMICAL ABSTRACTS, Band 93, Nr. 22, 1.**
**Dezember 1980, Zusammenfassung Nr.**
**209318z, Columbus, Ohio, US**

(73) Patentinhaber: **Degussa Aktiengesellschaft**
**Weissfrauenstrasse 9**
**W-6000 Frankfurt am Main 1(DE)**

(72) Erfinder: **Dörr, Jürgen, Dr.**
**Lindenstrasse 82**
**W-6239 Kriftel(DE)**
Erfinder: **Kleinschmit, Peter, Dr.**
**Wildaustrasse 19**
**W-6450 Hanau 9(DE)**
Erfinder: **Klingel, Reinhard, Dr.**
**Taunusstrasse 6**
**W-8755 Alzenau(DE)**
Erfinder: **Manner, Reinhard, Dr.**
**Bonhoefferstrasse 17**
**W-6457 Maintal 1(DE)**

EP 0 229 261 B1

## Beschreibung

Die Erfindung betrifft Zeolithformkörper, das Verfahren zu ihrer Herstellung sowie ihre Verwendung in Wärmespeichern.

Es ist bekannt, alkali und/oder erdalkali silikathaltige Zeolithgranulate in Wärmespeichern einzusetzen (DE-A- 33 12 875).

Weiterhin ist es bekannt, in Wärmespeichern Zeolithformlinge, die den Wärmetauscheroberflächen angepaßt sind und Strömungskanäle enthalten, zu verwenden (DE-A- 32 07 656).

Bekannt ist auch die Verwendung von Zeolithformlingen, die mit einem feinmaschigen Metallgewirk durchzogen sind, in Wärmetauschern (DE-A- 33 47 700).

Bekannt sind weiterhin Trocknungselemente aus Zeolith, die mit einer gasdurchlässigen Hülle aus Glas, Keramik, Porzellan, Kunststoff oder Metall versehen sind (EP-A- 0140 380).

Die bekannten Formkörper haben aufgrund des Metallgewirks erhebliche Nachteile. So läßt sich das Metallgewirk nur schwer in die Zeolithmasse einarbeiten. Eine Homogenisierung mit dem Zeolith-Bindemittelgemisch ist in bekannten Mischvorrichtungen nicht möglich. Metallgewirke sind teuer in der Herstellung. Sie sind relativ schwer und führen aufgrund des unterschiedlichen Ausdehnungskoeffizienten zu Rißbildungen und Brüchen in dem Zeolithformkörper.

Das Metallgewirk hat weiterhin den Nachteil, daß es durch Kontakt mit dem Wasser korrodiert.

Es bestand somit die Aufgabe, Zeolithformkörper für die Verwendung in Wärmespeichern bzw. Sorptionsvorrichtungen herzustellen, die entsprechend den jeweiligen Ausmassen der Wärmespeichervorrichtung geformt sind und eine ausreichende Festigkeit sowie einen einheitlichen Ausdehnungskoeffizienten aufweisen.

Gegenstand der Erfindung sind alkali und/oder erdalkali silikathaltige Zeolithformkörper, welche dadurch gekennzeichnet sind, daß sie neben Zeolith Alkali-und/oder Erdalkalisilikat, Mineralfaser und/oder Kohlefaser enthalten.

Die erfindungsgemäßen Zeolithformkörper können eine plattenähnliche Geometrie, bevorzugt die von flachen Körpern mit eckigen oder runden Begrenzungen mit Kantenlängen oder äquivalenten Durchmessern von 1 mm bis 500 mm, vorzugsweise von 10 mm bis 500 mm und eine Dicke von 1 mm bis 30 mm, vorzugsweise von 4 mm bis 25 mm haben.

Die Zeolithformkörper können eine dem Anwendungszweck entsprechende Oberfläche, wie z.B. eine strukturierte Oberfläche aufweisen. Die Oberflächenstrukturen können Einbuchtungen, wie z.B. Waffelmuster und profilierte Strömungskanäle jeglicher Geometrie wie bei Plattenwärmetauscherplatten üblich, sowie Hohlraumstrukturen, wie Wabenkörper oder Blockwärmetauscher sein. Es können z.B. durch eingebrachte Löcher oder Kanäle in Dreiecks- oder Viereckstellung mit Loch- bzw. äquivalenten Kanaldurchmessern von 0,2 bis 1,2 mal der Dicke der Zeolithformkörper, bevorzugt 0,8 bis 1,1, und einer Loch- bzw. Kanalteilung von 1,2 bis 2,5 mal Loch- bzw. äquivalenter Kanaldurchmesser, vorzugsweise 1,4 bis 2,0, hergestellt werden.

Ein weiterer Gegenstand der Erfindung ist ein Verfahren zur Herstellung des Zeolithformkörpers, welches dadurch gekennzeichnet ist, daß man pulverförmigen Zeolith mit Alkali- und/oder Erdalkalisilikat, wie z.B. Wasserglas, und Wasser mischt, Mineralfaser und/oder Kohlefaser hinzumischt, die erhaltene Mischung verpresst und stufenweise mit ansteigenden Temperaturen bis zur Gewichtskonstanz trocknet und aktiviert.

Die Formgebung des Zeolithformkörpers kann durch einen geeigneten Preßapparat erfolgen. Die Oberflächenstruktur kann sowohl durch die Pressung als auch durch eine mechanische Bearbeitung erzielt werden.

Die Formgebung kann durch eine isostatische oder einachsige Pressung im Bereich von 0,1 MPa bis 50 MPa, vorzugsweise im Bereich 0,1 bis 30 MPa als Funktion von Gestalt und Größe des Zeolithformkörpers erfolgen. Der Preßdruck kann während einer Zeitdauer im Bereich von 0 sec bis 20 Minuten, vorugsweise weniger als 10 Minuten konstant gehalten werden.

Als Zeolithe können Zeolithe vom Typ A,X oder Y, gegebenenfalls in ihrer mit $Na^{\oplus}$, $Mg^{\oplus\oplus}$ oder $Ca^{\oplus\oplus}$-Ionen ausgetauschten Form eingesetzt werden.

In einer bevorzugten Ausführungsform der Erfindung kann mit $Mg^{\oplus\oplus}$-Ionen ausgetauschter Zeolith A eingesetzt werden.

Als Mineralfaser kann man z.B. Triton Kaowool einsetzen.

Das Alkali- bzw. Erdalkalisilikat, insbesondere Wasserglas, das als Bindemittel zugesetzt wird, kann einen Modul von 2,0 bis 3,7, vorzugsweise 3,0 bis 3,7 besitzen.

Der Anteil der Mischung an Mineral- oder Kohlefaser kann von 0,1 bis 15 Gew.-%, vorzugsweise 0,5 bis 5 Gew.-%, bezogen auf die Mischung Zeolith-Wasser-Alkali-bzw. Erdalkalisilikat, betragen.

2

Die Mischung Wasserglas ( als g $SiO_2$ + g $Na_2O$) : Zeolith (atro):Wasser: Faser kann im Bereich von (7-29,5) : 100 : (12-73) : (0,2-28) jeden Wert annehmen. Vorzugsweise hat die Mischung die Zusammensetzung von (18-29):100:(60-70): (0,2-9,5).

Im Zeolithformkörper, können vor dem Trocknen, vor dem Aktivieren und/oder nach dem Aktivieren die genannten Kationen ausgetauscht werden. Bei dem Austausch der Erdalkaliionen im Zeolithformkörper kann aus Alkalisilikat unlösliches Erdalkalisilikat gebildet werden.

Der Zeolithformkörper, kann gegebenenfalls zunächst bei Temperaturen von 20-39° C, wobei man den $CO_2$-Gehalt der Trockenluft auf weniger als 200 ppm einstellt, anschließend gegebenenfalls in einem zweiten Trockenschritt bei Temperaturen von 40-120° C und gegebenenfalls in einer dritten Trockenstufe bei 121-200° C unter sonst gleichen Bedingungen getrocknet werden.

Der getrocknete Zeolithformkörper wird bei Temperaturen von höchstens 650° C aktiviert.

Diese erfindungsgemässen Zeolithformkörper lassen sich vorteilhafterweise leicht herstellten. Sie sind billig und korrosionsfest. Da die Mineralfasern, ebenso wie der Zeolith, vorwiegend aus $SiO_2$ und $Al_2O_3$ bestehen, ist der Ausdehnungskoeffizient von vergleichbarer Größe. Thermisch bedingte Risse und Brüche können daher in den erfindungsgemässen Zeolithformkörpern nicht auftreten.

Die erfindungsgunäper Zeolithförm Körper können in Wärmesperchern eingesetzt werden.

Die erfindungsgemäßen Zeolithformkörper können vorzugsweise zur Adsorption von Wassermolekülen eingesetzt werden. Je nach verwendeten Ausgangszeolith können die erfindungsgemäßen Zeolithformkörper auch grössere Moleküle adsorbieren.

Ebenfalls ist von Vorteil, daß die erfindungsgemäßen Zeolithformkörper nach ihrer Fertigstellung mit üblichen Werkzeugen (Säge, Bohrmaschine) bearbeitet werden können. So können spezielle Strömungskanäle beim Einbau in den Wärmetauscher vor Ort eingearbeitet werden. Bei Verwendung von Metallgeflecht ist dies nicht möglich, da sich an den Schnitt- oder Bohrrändern Einrisse oder Ausfranzungen bilden können.

Beispiel 1
‾‾‾‾‾‾‾‾‾

8,5 kg Zeolith Na-A (Wassergehalt 19.5 Gew.-%) werden mit 3,2 l Wasserglas (Modul 3,7; = 1,25 $g/m^3$) und 0,24 l $H_2O$ ca. 30 min. gemischt. Danach werden 382 g ( 3 %) Mineralfaser zugemischt. Aus der Mischung werden Formkörper nach folgenden Bedingungen hergestellt.

a. Größe der Presslinge     150 x 150 mm

b. Dicke     4 mm

c. Pressdauer     10 min.

Variation: Pressdruck

d.    1. Trocknung 20° C
      2. Trocknung 50° C
      3. Trocknung 110° C, jeweils bis zur Gewichtskonstanz

e.     Aktivierung 450° C

| Druck (MPa) | Wasseraufnahme (Gleichgewichtsbeladung 80 % rel. Feuchte) |
|---|---|
| 0,1 | 15,8 |
| 10,3 | 15,0 |
| 17,2 | 15,7 |
| 25,7 | 18,9 |
| 40,0 | 12,7 |

Beispiel 2

Es werden Mischungen nach Beispiel 1 mit dem Unterschied angesetzt, daß an Stelle von Na-A Zeolith ionenausgetauschte Zeolithe der Typen MgA, CaA, MgX, MgY eingesetzt werden. Zur Herstellung der ionenausgetauschten Zeolithe des Typs MgA werden 10 kg Zeolith Na-A in 19,5 % $Mg(NO_3)_2$-Lösung 2 Stunden bei 40°C suspendiert, filtriert und $NO_3$-frei gewaschen. Der Filterkuchen wird bei 105°C im Trockenschrank getrocknet und anschliessend aufgemahlen.

Zur Herstellung des Zeolithen Ca-A verwendet man analog wässrige $Ca(NO_3)_2$-Lösung.

Zeolithen der Typen MgX und MgY werden hergestellt, indem man nach der o. genannten Vorschrift arbeitet und statt 10 kg NaA Zeolith 10 kg NaX-Zeolith (20 Gew.-% $H_2O$) bzw. 10 kg NaY-Zeolith (21 Gew.-% $H_2O$) einsetzt. Die Verarbeitung (Zusammensetzung) erfolgt gemäß Beispiel 1. Pressdruck 25 MPa Aktivierung 650°C

| Art | Wasseraufnahme (Gleichgewichtsbeladung 80 %rel. Feuchte |
|-----|---------------------------------------------------------|
| MgA | 19,6 |
| CaA | 19,2 |
| MgX | 17,4 |
| MgY | 16,8 |
| NaA | 18,9 |

Beispiel 3

6,8 kg Zeolith Na-A (atro) werden mit 1,0 l Wasserglas (Modul 3,7, $\zeta$ = 1,25 $g/m^3$) gemischt und homogenisiert; danach arbeitet man 480 g Mineralfaser ein.
Variation: Größe der Presslinge 1 × 1 mm bis 500 × 500 mm
Druck 8 MPa
Dicke 5,2 mm
Pressdauer 20 min.
1. Trocknung 39°C
2. Trocknung 120°C bis zur Gewichtskonstanz
Aktivierung 500°C

| Kantenlänge | Wasseraufnahme (Gleichgewichtsbeladung 80 % rel. Feuchte) |
|-------------|-----------------------------------------------------------|
| 1 mm | 18,7 |
| 10 mm | 18,9 |
| 100 mm | 19,8 |
| 250 mm | 18,9 |
| 500 mm | 19,0 |

Beispiel 4

6,8 kg Zeolith NaA (atro) werden mit 4,0 l Wasserglas (Modul 2,0 $\zeta$ = 1,25 $g/m^3$) gemischt und homogensiert; danach arbeitet man 13 g Mineralfaser ein. Form 100 mm Ø
Pressdauer 5 min
Druck 17 MPa
Variation Dicke der Presslinge

1. Trocknung 20°C
2. Trocknung 85°C
3. Trocknung 125°C
Aktivierung 480°C

| Dicke | Wasseraufnahme (Gleichgewichtsbeladung 80 % rel. Feuchte) |
|---|---|
| 1 mm | 15,7 |
| 4 mm | 15,5 |
| 10 mm | 12,2 |
| 25 mm | 11,5 |
| 30 mm | 10,8 |

Beispiel 5

8,5 kg Zeolith (20 % $H_2O$) werden mit 4 l Wasserglas (Modul 2,0,$\zeta$ = 1,25 g/cm³) gemischt und homogensiert. Danach arbeitet man 1900 g Mineralfaser ein.
Form 5 mm Ø
Durck 8 MPa
Dicke 4 mm
Variation Pressdauer

| Dauer | Wasseraufnahme (Gleichgewichtsbeladung 80 % rel. Feuchte) |
|---|---|
| 0,1 sec. | 14,9 |
| 1 min | 15,2 |
| 5 min | 15,2 |
| 10 min | 16,0 |
| 20 min | 14,0 |

Beispiel 6

8,5 kg Zeolith MgX (20 % $H_2O$) werden mit 1 l Wasserglas (Modul 2,0 = 1,25 g/m³) und 1,5 l $H_2O$ homogen gemischt. Danach werden 700 g Mineralfaser eingearbeitet.
Die Formkörper werden gemäß Beispiel 1 hergestellt und aktiviert.
Die aktivierten Formkörper werden mit Bohrungen vom Durchmesser 1,4 mm bis 2,0 mm versehen.

| Wasseraufnahme (Gleichgewichtsbeladung 80 % rel. Feuchte) | Bohrungen |
|---|---|
| 16,5 % | 1,4 mm |
| 16,2 % | 1,7 mm |
| 16,8 % | 2,0 mm |

5

Beispiel 7

8,5 kg Zeolith NaA ( 20 % $H_2O$) werden mit 1 l Wasserglas (Modul 3,7,$\gamma$ = 1,25 g/m³ und 1,5 l Wasser homogenisiert. Danach arbeitet man 17 g Mineralfaser ein.

Die Formkörper werden gemäß Beispiel 1 bei Drücken von 25,7 MPa verpresst und anschliessend entsprechend Beispiel 1 nachbehandelt. In Abständen von 10 mm werden 2 mm tiefe und 5 mm breite Kanäle eingefräst. Die Wasseraufnahme (80 % rel. Feuchte bis Gleichgewichtsbeladung) beträgt 19,5 Gew.-%).

Beispiel 8

Es wird eine Mischung gemäß Beispiel 1 hergestellt. Die gepressten Zeolithformlinge werden in 3 Gruppen eingeteilt:

Gruppe A wird vor dem Trocknen mit wässriger $CaCl_2$ Lösung behandelt (pro Zeolithformkörper 1 l 2 m $CaCl_2$; 1 h Raumtemperatur).

Gruppe B wird nach dem Trocknung gemäß Beispiel 4 mit wässriger $CaCl_2$-Lösung behandelt (pro Zeolithformkörper 1 l 2 m $CaCl_2$, 1 h 60 °C).

Gruppe C wird nach Aktivierung gemäß Beispiel 2 mit wässriger $CaCl_2$ Lösung behandelt (pro Zeolithformkörper 1 l $CaCl_2$, 2,0 h 80 °C)

Danach werden alle Zeolithformlinge gemäß Beispiel 5 getrocknet und aktiviert.

| Gruppe | Austauschgrad Mol % | Wasseraufnahme (Gleichgewichts-ladung 80 % rel. Feuchte) |
|--------|------|------|
| A | 22,5 | 17,9 |
| B | 19,5 | 16,5 |
| C | 18,5 | 16,8 |

**Ansprüche**

1. Alkali -und/oder Erdalkalis silikathaltige Zeolithformkörper, dadurch gekennzeichnet, daß sie auch Mineralfaser und/oder Kohlefaser enthalten.

2. Verfahren zur Herstellung der Zeolithformkörper gemäß Anspruch 1, dadurch gekennzeichnet, daß man pulverförmigen Zeolith mit Alkali- und/oder Erdalkalisilikat, wie z.B. Wasserglas, und Wasser mischt, Mineralfaser und/oder Kohlefaser hinzumischt, die erhaltene Mischung verpresst und stufenweise mit ansteigenden Temperaturen bis zur Gewichtskonstanz trocknet und aktiviert.

3. Verwendung der Zeolithformkörper nach Anspruch 1 in Wärmespeichern.

**Claims**

1. Moulded zeolite products containing alkali metal and/or alkaline earth metal silicates, characterised in that they also contain mineral fibres and/or carbon fibres.

2. A process for the production of moulded zeolite products according to Claim 1 characterised in that pulverulent zeolite is mixed with alkali metal and/or alkaline earth metal silicate such as, for example, water glass, and water, mineral fibres and/or carbon fibres are added, and the resulting mixture is compressed and dried stepwise at increasing temperatures to constant weight and activated.

3. Use of the moulded zeolite products according to Claim 1 in heat stores.

**Revendications**

1. Corps de moulage de zéolite contenant des silicates alcalins et/ou alcalino-terreux, caractérisés en ce qu'ils renferment également des fibres minérales et/ou des fibres de carbone.

2. Procédé d'obtention des corps de moulage de zéolite selon la revendication 1, caractérisé en ce que l'on mélange de la zéolite pulvérulente avec un silicate alcalin et/ou alcalino-terreux comme par exemple du verre soluble et avec de l'eau que l'on ajoute des fibres minérales et/ou des fibres de carbone que l'on comprime le mélange obtenu et que par étapes avec des températures croissantes on sèche jusqu'à constance du poids puis on active.

3. Utilisation des corps de moulage de zéolite selon la revendication 1 dans les accumulateurs thermiques.